# EUROPÄISCHE PATENTANMELDUNG

(11) **EP 3 081 287 A1**
(43) Veröffentlichungstag der Anmeldung: **19.10.2016**
(21) Anmeldenummer: 15164030.7
(22) Anmeldetag: 17.04.2015
(51) Int. Cl.: B01J 8/44

(54) **GASVERTEILERBODEN FÜR WIRBELSCHICHTAPPARATUREN ODER FLIESSAPPARATUREN**

(71) Anmelder: Bauer, Kurt H., Prof. Dr., D-79112 Freiburg (DE)
(72) Erfinder: Bauer, Kurt Prof. Dr., 79112 Freiburg (DE)
(74) Vertreter: Hoffmann Eitle

(57) **Zusammenfassung**

Ein Gasverteilerboden für Wirbelschichtapparaturen oder Fließapparaturen mit einem mehrschichtigen Aufbau, umfasst eine obere Schicht (12) mit ersten Gasdurchlassöffnungen (14) für einen Gasstrom, eine an der oberen Schicht (12) anliegende, mittlere Schicht (24) mit zweiten Gasdurchlassöffnungen (26) für den Gasstrom und eine untere Schicht (32), welche die mittlere Schicht (24) abstützt und im Wesentlichen vollständig für den Gasstrom durchlässig ist, wobei die mittlere Schicht (24) oder Teile (16a, 16b ... ) der mittleren Schicht (24) relativ zur oberen Schicht (12) zwischen einer ersten Position und einer zweiten Position bewegbar ist, in der ersten Position die zweiten Gasdurchlassöffnungen (26) mit den ersten Gasdurchlassöffnungen (18) im Wesentlichen deckungsgleich sind und in der zweiten Position die ersten Gasdurchlassöffnungen (18) durch die mittlere Schicht (24) im Wesentlichen verschlossen sind.

## Beschreibung

### Gebiet der Erfindung

Die Erfindung betrifft einen Gasverteilerboden für Wirbelschichtapparaturen und Fließapparaturen sowie eine Wirbelschichtanlage oder Fließbettanlage mit einem derartigen Gasverteilerboden.

### Stand der Technik

Gasverteilerböden werden in verfahrenstechnischen Anlagen und insbesondere in Wirbelschichtapparaturen und Fließbettapparaturen eingesetzt. Sie sorgen für den erforderlichen Gas- oder Lufteinlass in diese Apparaturen und haben eine entscheidende Bedeutung dahingehend, dass sie die Gas- oder Luftströmung in den Apparaturen beeinflussen. Über die Beeinflussung der Gas- oder Luftströmung haben Gasverteilerböden auch erheblichen Einfluss auf die Entstehung, Ausbildung und Wirkungsweise von Wirbelschichten und Fließbetten. Darüber hinaus haben Gasverteilerböden die Aufgabe, das Reaktionsgut zu tragen, wobei verhindert werden soll, dass zu viel Reaktionsgut unbeabsichtigt durch die Öffnungen in dem Gasverteilerboden hindurchfallen kann. Üblicherweise werden bei Gas- oder Luftverteilerböden einfache Siebböden oder aber besonders konstruierte Loch-, Lamellen- oder Schlitzböden eingesetzt.

Da die Gasverteilerböden die Gas- oder Luftströmung in den Geräten entscheidend beeinflussen, haben sie einen hohen Einfluss auf den Betrieb von Wirbelschichten oder Fließbetten.

### Darstellung der Erfindung

Der Erfindung liegt die Aufgabe zugrunde, einen Gasverteilerboden vorzuschlagen, mit Hilfe dessen sich eine verbesserte Effektivität der Fluidisation in einer Wirbelschicht oder Fließbettapparatur erzielen lässt.

Diese Aufgabe wird durch einen Gasverteilerboden mit den Merkmalen des Anspruchs 1, eine Wirbelschichtanlagen nach Anspruch 10 und eine Fließbettanlage nach Anspruch 11 gelöst. Vorteilhafte Ausführungsformen folgen aus den übrigen Ansprüchen.

Erfindungsgemäß weist ein Gasverteilerboden für Wirbelschichtapparaturen oder Fließbettapparaturen einen mehrschichtigen Aufbau auf, umfassend eine obere Schicht mit ersten Gasdurchlassöffnungen für einen Gasstrom, eine an der oberen Schicht anliegende, mittlere Schicht mit zweiten Gasdurchlassöffnungen für den Gasstrom sowie eine untere Schicht, welche die mittlere Schicht abstützt und im Wesentlichen vollständig für den Gasstrom durchlässig ist, wobei die mittlere Schicht oder Teile der mittleren Schicht relativ zur oberen Schicht zwischen einer ersten Position und einer zweiten Position bewegbar ist, in der ersten Position die zweiten Gasdurchlassöffnungen mit den ersten Gasdurchlauföffnungen im Wesentlichen deckungsgleich sind, und in der zweiten Position die ersten Gasdurchlassöffnungen durch die mittlere Schicht im Wesentlichen verschlossen sind.

Mit anderen Worten weist der erfindungsgemäße Gasverteilerboden einen mehrschichtigen Aufbau mit zumindest drei Schichten auf, wobei die an einer oberen Schicht anliegende mittlere Schicht relativ zur oberen Schicht bewegbar ist. Durch die relative Bewegung der mittleren Schicht zur oberen Schicht wird der für den Durchtritt des Gas- oder Luftstroms zur Verfügung stehende Querschnitt der ersten Gasdurchlassöffnungen verändert, wobei die erste Position und zweite Position die Extremsituationen darstellen, in der der Gasstrom ungehindert von den zweiten Gasdurchlassöffnungen in die ersten Gasdurchlassöffnungen strömen kann (vollkommene Öffnung) oder aber der Durchtritt für Gas zwischen den zweiten Gasdurchlassöffnungen und den ersten Gasdurchlassöffnungen versperrt ist(vollkommener Verschluss). Auf diese Weise kann durch ein stufenloses Verschieben der mittleren Schicht zwischen diesen Extremsituationen die Gasströmung in einem weiten Bereich eingestellt werden, um eine maximale Fluidisationseffektivität in der Apparatur zu ermöglichen.

Bezugnahmen auf "oben" und "unten" beziehen sich in Bezug auf den Gasverteilerboden auf dessen Einbaulage in einer Wirbelschichtapparatur oder Fließapparatur. Das Reaktionsgut liegt im Fall eines vollkommen geschlossenen Gasverteilerbodens auf der oberen Schicht und auf den Teilen der mittleren Schicht des Gasverteilerbodens auf, welche die Öffnungen der oberen Schicht verschließen. Auch bei Bezugnahmen auf die Einbaulage des Gasverteilerbodens und die Definition einer horizontalen oder vertikalen Richtung wird davon ausgegangen, dass sich der Gasverteilerboden so in einer Wirbelschichtapparatur oder Fließapparatur befindet, dass die Hauptflächen des Gasverteilerbodens horizontal angeordnet sind.

Nach einer bevorzugten Ausführungsform der Erfindung weist der Gasverteilerboden eine kreisförmige Form auf, da die Wirbelschicht- oder Fließbettapparaturen in der Regel zylindrische oder kegelförmige Formen besitzen. Sie können jedoch auch eine quadratische Geometrie oder die Form eines regelmäßigen Polygons aufweisen, wenn die Apparateformen von der üblichen Form abweichen.

Diese Geometrien sind dabei an die Formen der verwendeten Wirbelschichtapparaturen oder Fließapparaturen angepasst.

Vorzugsweise sind die ersten und zweiten Gasdurchlassöffnungen Schlitze, die konzentrisch zu einer Mittelachse angeordnet sind. Die Position der Mittelachse im Falle einer quadratischen Geometrie ist dabei über den Schnittpunkt der Diagonalen definiert, während im Falle einer Geometrie in Form eines regelmäßigen Polygons sich die Mittelachse an dem Berührungspunkt der einzelnen Segmente des Polygons befindet.

Bei vielen handelsüblichen Wirbelschicht- oder Fließbettgeräten sind die Gasdurchlassöffnungen in den Gasverteilerböden im Wesentlichen radial angeordnet. Im Falle einer radialen Anordnung der Gasdurchlassöffnungen kann eine Verdrehung der mittleren Schicht relativ zur oberen Schicht den für den Durchtritt des Gas- oder Luftstroms zur Verfügung stehenden Querschnitt der ersten Gasdurchlassöffnungen verändern. Eine radiale Anordnung der Gasdurchlassöffnungen weist jedoch den Nachteil auf, dass sich die nicht durchbrochenen Flächen mit der Zunahme des Radius vergrößern. Dieser Nachteil wird durch die Anordnung schlitzförmiger Gasdurchlassöffnungen konzentrisch zur Mittelachse vermieden. Bei einer kreisförmigen Form des Gasverteilerbodens sind die konzentrischen Schlitze gekrümmt, wohingegen bei Geometrien des Gasverteilerbodens mit Ecken (quadratisch, polygonal) die einzelnen Schlitze gerade sind, aber im gesamten Anordnungsprinzip dennoch konzentrisch zur Mittelachse angeordnet sind. Im Falle einer kreisförmigen Geometrie können die konzentrischen Schlitze natürlich nicht vollkommen im Kreis herumgeführt werden, sondern müssen in bestimmten Abständen durch möglichst feine Stege stabilisiert werden. Diese Stege vermindern natürlich die durchlässigen Flächen, die sich optimal den 50% annähern, wenn die Flächenabmessungen der durchlässigen Schlitze und die der nicht durchlässigen Stege gleich sind. Gleiches gilt bei der Verwendung einzelner Segmente bei einer quadratischen oder polygonalen Geometrie.

Es ist bevorzugt, dass die mittlere Schicht in eine Mehrzahl von Segmenten unterteilt ist, wobei die Segmente in radialer Richtung relativ zur Mittelachse zwischen der ersten Position und der zweiten Position bewegbar sind. Bei dem Vorsehen konzentrisch zu einer Mittelachse angeordneter Gasdurchlassöffnungen kann die gewünschte Einstellung des Gasverteilerbodens nur erreicht werden, indem die gesamte Fläche in Segmente unterteilt wird, wobei die Verwendung von 4 bis 8 Segmenten vorteilhaft ist.

Vorzugsweise sind auf der der mittleren Schicht zugewandten Seite der oberen Schicht sowie auf der der oberen Schicht zugwandten Seite der mittleren Schicht die Geometrien der ersten und zweiten Gasdurchlassöffnungen sowie der zwischen den ersten und zweiten Gasdurchlassöffnungen angeordneten Stege gleich. Nachdem die die ersten und zweiten Gasdurchlassöffnungen bildenden Schlitze sowie die dazwischen angeordneten Stegverbindungen annährend gleiche Abmessungen und Formen aufweisen, lassen sich mehrere Vorteile erzielen. Zum einen wird durch die Aufteilung der Flächen in konzentrische Schlitze und im Wesentlichen genauso breite Stege zwischen den Schlitzen eine nahezu 50%ige und somit optimale Durchlässigkeit des erfindungsgemäßen Gasverteilerbodens erzielt. Ein weiterer Vorteil besteht darin, dass bei einem radialen Verschieben der Kreissegmente der mittleren Schicht um eine Schlitzbreite die zunächst voll geöffneten ersten Gasdurchlassöffnungen (erste Position) total geschlossen werden können (zweite Position). Darüber hinaus ist bei einer konzentrischen Anordnung der Gasdurchlassöffnungen nur ein geringer Verstellweg erforderlich, um den Gasstrom zwischen den möglichen Extremwerten zu verstellen.

Vorzugsweise sind die obere Schicht, mittlere Schicht und untere Schicht aus rostfreiem Stahlblech gefertigt.

Nach einer bevorzugten Ausführungsform der Erfindung sind zwischen den ersten Gasdurchlassöffnungen angeordnete Stege zu der von der mittleren Schicht abgewandten und zum Prozessgut hin gewandten Seite verjüngt und vorzugsweise zugespitzt. Diese Gestaltung hat den Vorteil, dass die Oberflächen der oberen Schicht, die von der mittleren Schicht abgewandt sind und somit in Einbaulage des Gasverteilerbodens zum Innenraum der Apparatur gerichtet sind, so wenig wie möglich waagrechte Flächen aufweisen. Dies führt dazu, dass sich im Betrieb nicht nur vertikale Strömungen ausbilden, sondern zumindest einige horizontale oder schräge Gas- oder Luftgleitschichten. Diese Konstruktionen sind deshalb in der Lage, Ablagerungszonen am Gasverteilerboden von nicht oder zu wenig bewegtem Prozessgut zu verhindern. Im Falle zugespitzter Stege ist es dabei möglich, die Kanten der Schlitzkonstruktion sowohl scharfkantig zu belassen wie auch abzurunden.

Nach einer bevorzugten Ausführungsform der Erfindung verlaufen die zweiten Gasdurchlassöffnungen in Einbaulage winklig zur Vertikalen und sind vorzugsweise in einem Winkel von 30° bis 45° zur Vertikalen geneigt. Durch die Schrägstellung der Gas- oder Luftströmung wird eine Umwälzbewegung des Reaktionsgutes zu Verbesserung des Mischeffekts unterstützt. Die ersten Gasdurchlassöffnungen sind ebenfalls so geneigt, dass sich im Zusammenwirken mit den zweiten Gasdurchlassöffnungen der gewünschte Dralleffekt erzeugen lässt.

Vorzugsweise sind die zweiten Gasdurchlassöffnungen dabei so geneigt, dass der durch die zweiten Gasdurchlassöffnungen hindurchtretende Gasstrom in Einbaulage gegen die Wand der Wirbelschichtapparatur oder Fließbettapparatur gerichtet ist. Durch die Schrägstellung der Gas- oder Luftströmung aufgrund der Neigung der Schlitze nach außen wird in der Apparatur eine Ablenkung der Strömung und der Gutbewegung nach außen bewirkt. Da sich die Räumlichkeit der Apparatur in der radialen Richtung nach außen erweitert, kann auf diese Weise der Strom des Reaktionsgutes in diese Richtung aufgelockert werden, wohingegen sich bei einer Ablenkung nach innen der Raum verengen würde.

Die erfindungsgemäße Wirbelschichtanlage oder Fließbettanlage umfasst vorzugsweise weiterhin eine Steuerungseinrichtung, um die mittlere Schicht in definierten Stufen oder stufenlos zwischen der ersten Position und der zweiten Position zu bewegen. Die Einstellung der relativen Position der mittleren Schicht zur oberen Schicht ermöglicht es, die Öffnungsbreite der ersten Gasdurchlassöffnungen definiert einzustellen, wodurch sich die Strömungsmenge und die Strömungsgeschwindigkeit des Gas- oder Luftstroms in gewünschter Weise verändern und einstellen lässt.

### Kurze Beschreibung der Zeichnungen

Nachfolgend wird die Erfindung rein beispielhaft anhand der beiliegenden Figuren beschrieben, in den
- Fig. 1a: eine Draufsicht auf die obere Schicht eines erfindungsgemäßen Gasverteilerbodens darstellt;
- Fig. 1b: eine Draufsicht auf die mittlere Schicht eines erfindungsgemäßen Gasverteilerbodens darstellt, wobei nur in einem einzelnen Segment die Gasdurchlassöffnungen und dazwischen angeordneten Stege dargestellt sind;
- Fig. 2: eine Seitenansicht des in Fig. 1 dargestellten Gasverteilerbodens zeigt;
- Fig. 3: einen Gasverteilerboden mit der Form eines regelmäßigen Polygons darstellt;
- Fig. 4: einen Gasverteilerboden mit einer quadratischen
- Fig. 5: Geometrie zeigt; eine mögliche Gestaltung der unteren Schicht des erfindungsgemäßen Gasverteilerbodens als Stützschicht der beweglichen mittleren Schicht zeigt;
- Fig. 6 bis 9: jeweils schematisch die Relativbewegung zwischen oberer und mittlerer Schicht des erfindungsgemäßen Gasverteilerbodens und die daraus resultierende Geometrie von Schlitzen in der geschlossenen und in der geöffneten Position bei unterschiedlichen Geometrien der Luftdurchlassöffnungen darstellen; und
- Fig. 10: eine alternative Gestaltung eines erfindungsgemäßen Gasverteilerbodens zeigt.

### Wege zur Ausführung der Erfindung

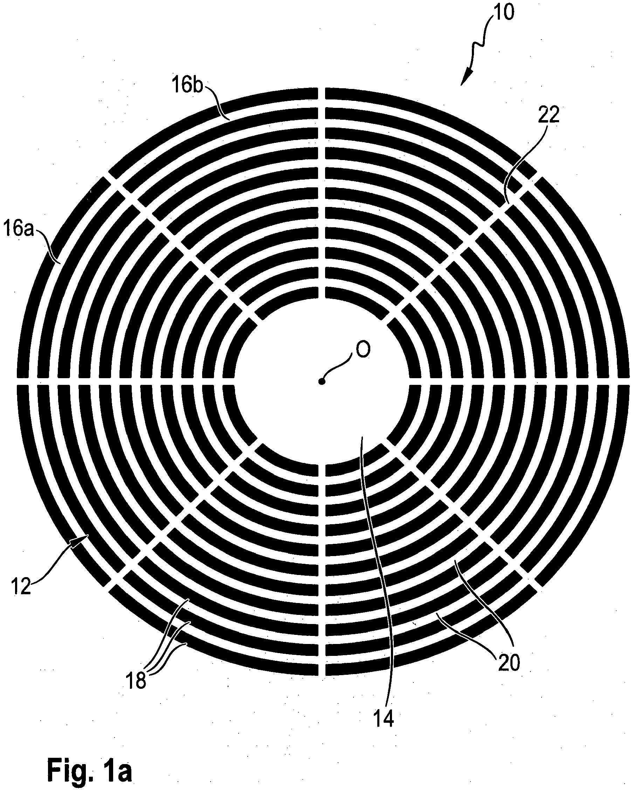

Fig. 1a zeigt eine Draufsicht auf die obere Schicht 12 eines allgemein mit 10 bezeichneten Gasverteilerbodens. Der gesamte Gasverteilerboden hat eine kreisförmige Geometrie, deren Durchmesser an die bestimmungsgemäße Verwendung in einer Wirbelschichtapparatur oder Fließbettapparatur angepasst ist. Im radialen Zentrum befindet sich ein Bereich 14, der entsprechend herkömmlicher Bautypen von Gasverteilerböden entweder eine Öffnung für eine Bottom-Sprühdüse oder den erforderlichen Platz für einen Gutabweisekegel aufweist. Weiterhin ist erkennbar, dass die Kreisfläche in einzelne Kreissegmente unterteilt ist. Im vorliegenden Fall liegen 8 Kreissegmente vor, von denen 2 Segmente zur Verdeutlichung mit den Referenzziffern 16a und 16b bezeichnet wurden. Die obere Schicht weist konzentrisch verlaufende Schlitze 18 auf, die Gasdurchlassöffnungen darstellen. Zwischen den Schlitzen 18 befinden sich Stege 20, deren radiale Stärke denjenigen der Schlitze 18 entspricht. Da die Schlitze 18 nicht umlaufen können, sind zudem radial verlaufende Stützstege 22 vorgesehen, deren Verlauf der Segmenteinteilung der oberen Schicht 12 entspricht. Die Stützstege 22 sind auch aus Stabilitäts- und Druckresistenzgründen erforderlich.

Bei der in Fig. 1a dargestellten Geometrie des Gasverteilerbodens mit kreisförmiger Geometrie sind die Schlitze 18 konzentrisch zur Mittelachse (O) angeordnet.

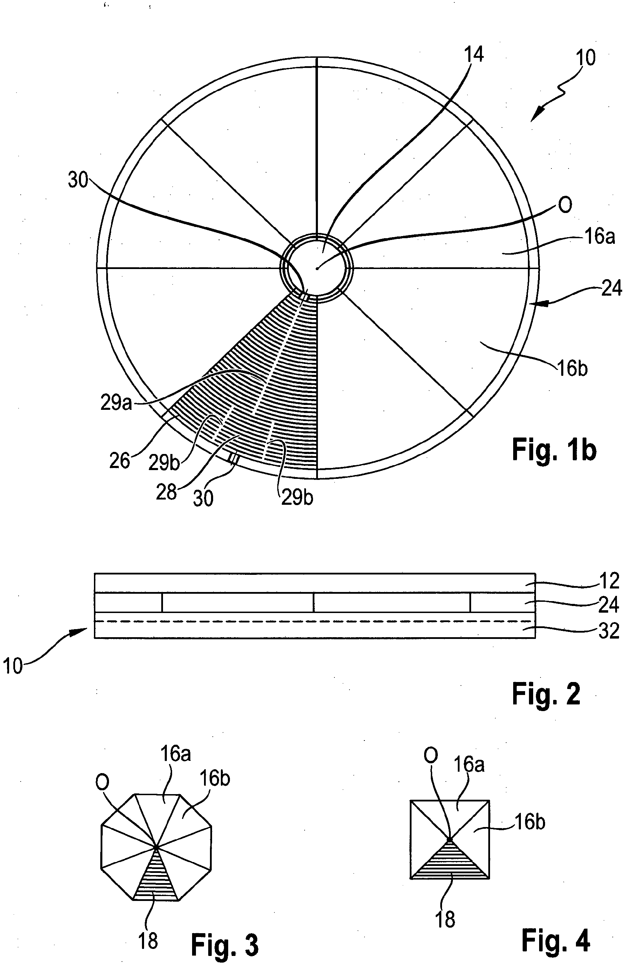

Alternativ kann die Form des Gasverteilerbodens aber auch quadratisch oder in Form eines regelmäßigen Polygons sein, wie in den Fig. 4 und 3 dargestellt ist. In den in Fig. 3 und 4 schematisch dargestellten Fällen mit einer unterschiedlichen Außenkontur des Gasverteilerbodens sind die Schlitze 18 gerade, dennoch aber punktsymmetrisch in Bezug auf die Mittelachse O angeordnet. Das Anordnungsprinzip weicht somit nicht ab und wird im Rahmen dieser Beschreibung ebenfalls als konzentrisch bezeichnet.

Durch die konzentrische Anordnung der Schlitze 18 lässt sich über den Radius ein im Wesentlichen gleichbleibender Öffnungsanteil der Schlitze erzielen.

In Fig. 1b ist die mittlere Schicht 24 des Gasverteilerbodens 10 dargestellt, wobei nur in einem der Segmente zweite Schlitze 26 sowie zwischen Schlitzen 26 angeordnete, zweite Stege 28 dargestellt sind.

Die Schlitze sollten im Bereich eines Segments möglichst durchgehend sein. Je nach der Größe des Gasverteilerbodens können erforderlichenfalls verstärkend weitere Stabilisationsstege eingefügt werden. In der Fig. 1b sind dazu exemplarisch bei den radial inneren Radien in der Mitte ein Steg 29a vorgesehen, bei den längeren äußeren Radien sogar zwei weitere Stege.

Während die in Fig. 1a dargestellte obere Schicht 12 immobil ist, sind in Fig. 1b die einzelnen Segmente 16a, 16b ... der mittleren Schicht 24 in Radialrichtung bewegbar. Hierzu weisen die Segmente radiale Führungsrillen oder Schienen auf, entlang derer die Segmente in radialer Richtung verschiebbar sind. Diese sind in Fig. 1b mit Referenzziffer 30 bezeichnet. Die mittlere Schicht 24 ist in Segmente unterteilt ist, um eine radiale Verschiebbarkeit der Schlitze und Stege gegenüber der unbeweglichen oberen Schicht 12 zu erreichen. Außerdem ist wichtig, dass die Abmessungen und Geometrien der Schlitze und Stege den einander zugewandten Flächen der oberen und mittleren Schicht im Wesentlichen identisch sind.

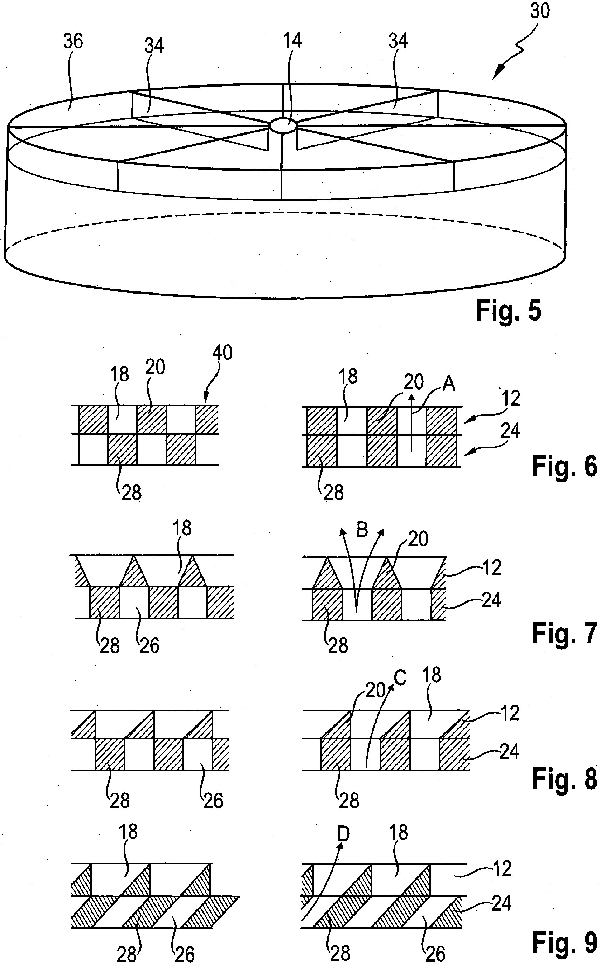

Wie aus der Seitenansicht auf den erfindungsgemäßen Gasverteilerboden 10 nach Fig. 2 ersichtlich ist, liegen die obere Schicht 12 und mittlere Schicht 24 aneinander an. Darüber hinaus ist eine untere Schicht 32 vorgesehen, die in Fig. 5 dargestellt ist und, ebenso wie die obere Schicht 12, immobil ist.

Die schematisch in Fig. 5 dargestellte, untere immobile Stützschicht 32 des erfindungsgemäßen Gasverteilerbodens zeigt die einzelnen Stützstreben 34, die sich nach der in Fig. 1a, 1b dargestellten Kreissegment-Aufteilung ausrichten. Die Stützstreben 34 haben nicht nur seitliche Stützaufgaben, sie können auch in den Richtungen nach oben und unten entsprechend verstärkt werden.

Wie ebenfalls aus der Figur 5 ersichtlich ist, ist abgesehen von den Stützstreben 34, dem ringförmigen Umfangsblech 36 und der Öffnung 14 die untere Schicht 32 vollständig durchlässig für den Gasstrom gestaltet. Die untere Schicht 32 dient als Stützschicht und soll nicht nur den gesamten Gasverteilerboden stützen, sondern in erster Linie die mobilen Segmente der mittleren Schicht 24.

Im Folgenden soll die Funktionsweise des erfindungsgemäßen Gasverteilerbodens erläutert werden. Nur zwei der drei Schichten, nämlich die obere Schicht 12 und die mittlere Schicht 24 sind mit Gasdurchlassöffnungen in Form von Schlitzen 18, 26 versehen, die in einer möglichen Betriebsposition genau übereinander liegen. Während die obere Schicht 12 und untere Schicht 32 immobil sind, ist die mittlere Schicht 24 durch die Aufteilung in Segmente bewegbar, indem die einzelnen Segmente in radialer Richtung relativ zu den immobilen oberen und unteren Schichten verschiebbar sind. Da die Schlitze konzentrisch angeordnet sind und die Breiten der zwischen den Schlitzen angeordneten Stege identisch zur Bereite der Schlitze ist, kann beim radialen Verschieben der Kreissegmente der mittleren Schicht um eine einzige Schlitzbreite der zunächst voll geöffnete Schlitz der beiden übereinanderliegenden oberen Schicht 12 und Mittelschicht 24 durch die zweiten Stege 28 der mittleren Schicht 24 vollständig geschlossen werden. Durch nur teilweise Verschiebungen der Segmente der mittleren Schicht lassen sich die Öffnungsbreiten der Schlitze 18 der oberen Schicht 14 und damit die Strömungsmenge und die Strömungsgeschwindigkeit auch in beliebiger Abstufung verändern.

Durch die annährend gleichen Abmessungen der Schlitze und Stege besteht die Gesamtfläche des Gasverteilerbodens zu nahezu 50% aus durchströmbarer Fläche, so dass im Falle einer Positionierung der mittleren Schicht so, dass eine maximale Gasdurchströmung möglich ist, der Gasverteilerboden eine optimale Durchlässigkeit aufweist.

Die Steuerung des Gasverteilerbodens wird anhand der schematischen Fig. 6 bis 9 erläutert werden. Dabei sind jeweils vom dreischichtigen Aufbau des Gasverteilerbodens nur die obere Schicht 12 sowie mittlere Schicht 24 in den Fig. 6 bis 9 dargestellt. In der Zeichenebene links ist jeweils die Relativposition zwischen der oberen Schicht 12 und der mittleren Schicht 24 dargestellt, bei der die Schlitze 18 der oberen Schicht 12 durch die zweiten Stege 28 der mittleren Schicht vollständig geschlossen sind. Bei der in der Zeichenebene rechten schematischen Darstellung in den Fig. 6 bis 9 ist hingegen die vollständig geöffnete genau übereinander liegende Position der Schlitze dargestellt, in welcher die zweiten Stege 28 der mittleren Schicht 24 die Schlitze 18 der oberen Schicht nicht versperren und somit den maximal verfügbaren Öffnungsquerschnitt bereitstellen. Bei der Darstellung nach Fig. 6 ist die zum Reaktionsgut 40 weisende obere Fläche der oberen Schicht 14 im Bereich der Stege 20 waagerecht. Dies ist nachteilig, weil sich das Reaktionsgut auf der Fläche 40 ablagern kann, aber auch die miteinander fluchtenden Schlitze der oberen Schicht 12 sowie mittleren Schicht 24 einen in Einbauposition vertikalen Gasstrom A fördern.

Um vor allem diesen Nachteilen der Gutablagerung entgegenzuwirken ist bei dem Ausführungsbeispiel nach Fig. 7 die Geometrie der Stege 20 der oberen Schicht 12 so gewählt, dass die Form der Stege nach oben zugespitzt ist, wobei anstelle der scharfkantigen Spitzen auch abgerundete Formen verwirklicht sein können. Diese Geometrie hat den Vorteil, dass der Gasstrom B, der in Fig. 7 dargestellt ist, auch eine horizontale Komponente aufweist. Weiterhin werden unerwünschte Ablagerungen von Reaktionsgut vermieden oder zumindest erheblich verringert.

Eine weitere Variante, die verwendet werden kann, um den Gasstrom in eine bestimmte Richtung abzulenken, ist in der Fig. 8 dargestellt. Wird hier die mittlere Schicht von der links in der Figur dargestellten, geschlossenen Position in die rechts dargestellte, vollständig geöffnete Position verschoben, so wird der Gasstrom eine mittlere Strömungsrichtung C annehmen.

Eine weitere Maßnahme zum Erzielen eines gezielt gerichteten Gasstroms besteht darin, die zweiten Schlitze 26 der mittleren Schicht 24 geneigt auszuführen. Eine mögliche Gestaltung und die Anordnung der Schlitze in geöffneter wie auch geschlossener Position ist in Fig. 9 dargestellt. Wenn die mittlere Schicht 24 in die rechts in Fig. 9 dargestellte Position verschoben ist, in der in der Kontaktebene zwischen der oberen Schicht 12 und der mittleren Schicht 24 der Öffnungsquerschnitt der zweiten Schlitze 26 den Eintrittsquerschnitt der Schlitze 18 entspricht, wird der Gasstrom durch die Neigung der zweiten Schlitze 26 in eine gewünschte Richtung gelenkt. Vorzugsweise wird dabei der Luftstrom in der Wirbelschichtapparatur oder Fließbettapparatur radial nach außen gelenkt, um eine Umwälzbewegung des Mischgutes und eine Verbesserung des Mischeffektes zu erzielen.

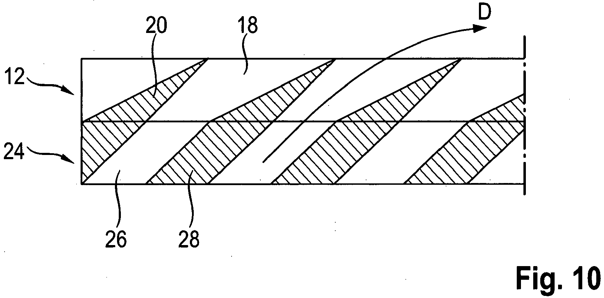

Eine alternative Gestaltung ist in Fig. 10 dargestellt. Ein Vergleich der Geometrien nach Fig. 9 und 10 macht deutlich, dass der Luft- oder Gasstrahl durch die gezielte Geometrie der Schlitze in eine vorbestimmte Richtung lenken lässt und beispielsweise an die linke Wand oder rechte Wand angelehnt wird. Auch bei der Ausführungsform nach Fig. 10 weist die dem Gut zugewandte Fläche keine waagrechten Abschnitte zur Gutablagerung auf.

Die Dicken der Schichten 12, 24 und 32 sowie die Abmessungen der Spaltbreiten und der Stege zwischen den Spalten liegen bei 1-2 mm im Pilot-Plant Bereich. Aufgrund der erforderlichen Druckbelastbarkeit der Verteilerböden sind diese Maßangaben allerdings ebenso wie die Anlagen selbst einem scale-up unterworfen. Bei größeren Produktionsanlagen können die Dicken der Schichten und die Abmessungen der Spaltbreiten und Stege in Abhängigkeit von der Apparaturengröße und dem zu erwartenden Druckbeanspruchungsprofil auf 3-5 mm oder 10 mm erhöht werden.

Der erfindungsgemäße Gasverteilerboden für Wirbelschichten und Fließbetten mit vertikalen oder schrägen Schlitzen ist über eine geeignete Steuerungseinrichtung betätigbar, wodurch sich über das dosierte Öffnen und Schließen der Gasdurchlassöffnungen der oberen Schicht bestimmte Gutbewegungsabläufe erzeugen lassen. Außerdem lassen sich bei physikalisch verschiedenartigen Reaktionsgütern Vorteile in Bezug auf einen optimalen Betrieb der Apparatur verwirklichen. Bei verschlossenen Schlitzen kann zudem keinerlei Gut hindurchfallen. Außerdem lassen sich beim Vorsehen verschiedener Segmente diese auch einzeln steuern, was eine weitere Flexibilität bei der gewünschten Einstellung der Intensität der Luftströmungen ermöglicht. Auch ist es möglich, die Segmentreihen in ganz bestimmten, wechselnden Takten anzusteuern, um spezielle Strömungszustände in der Wirbelschicht oder dem Fließbett zu erzeugen.

## Patentansprüche

1. Gasverteilerboden für Wirbelschichtapparaturen oder Fließapparaturen mit
- einem mehrschichtigen Aufbau, umfassend
- eine obere Schicht (12) mit ersten Gasdurchlassöffnungen (14) für einen Gasstrom;
- eine an der oberen Schicht (12) anliegende, mittlere Schicht (24) mit zweiten Gasdurchlassöffnungen (26) für den Gasstrom; und
- eine untere Schicht (32), welche die mittlere Schicht (24) abstützt und im Wesentlichen vollständig für den Gasstrom durchlässig ist; wobei
- die mittlere Schicht (24) oder Teile (16a, 16b ...) der mittleren Schicht (24) relativ zur oberen Schicht (12) zwischen einer ersten Position und einer zweiten Position bewegbar ist;
- in der ersten Position die zweiten Gasdurchlassöffnungen (26) mit den ersten Gasdurchlassöffnungen (18) im Wesentlichen deckungsgleich sind; und
- in der zweiten Position die ersten Gasdurchlassöffnungen (18) durch die mittlere Schicht (24) im Wesentlichen verschlossen sind.

2. Gasverteilerboden nach Anspruch 1,
**dadurch gekennzeichnet, dass**
der Gasverteilerboden (10) eine kreisförmige oder quadratische Geometrie oder die Form eines regelmäßigen Polygons aufweist.

3. Gasverteilerboden nach Anspruch 1 oder Anspruch 2,
**dadurch gekennzeichnet, dass**
die ersten (18) und zweiten (26) Gasdurchlassöffnungen Schlitze sind, die konzentrisch zu einer Mittelachse (O) angeordnet sind.

4. Gasverteilerboden nach einem der vorhergehenden Ansprüche,
**dadurch gekennzeichnet, dass**
die mittlere Schicht (24) in eine Mehrzahl von Segmenten (16a, 16b, ... ) unterteilt ist; und
die Segmente (16a, 16b, ... ) jeweils in radialer Richtung relativ zur Mittelachse (O) zwischen der ersten Position und zweiten Position bewegbar sind.

5. Gasverteilerboden nach Anspruch 4, **dadurch gekennzeichnet, dass**
auf der der mittleren Schicht (24) zugewandten Seite der oberen Schicht (12) sowie auf der der oberen Schicht (12) zugewandten Seite der mittleren Schicht (24) die Geometrien der ersten (18) und zweiten (26) Gasdurchlassöffnungen sowie dazwischen den ersten und zweiten Gasdurchlassöffnungen angeordneten Stegen (20, 28) gleich sind.

6. Gasverteilerboden nach einem der vorhergehenden Ansprüche,
**dadurch gekennzeichnet, dass**
die obere Schicht (12), mittlere Schicht (24) und untere Schicht (32) aus rostfreiem Stahlblech bestehen.

7. Gasverteilerboden nach einem der vorhergehenden Ansprüche,
**dadurch gekennzeichnet, dass**
zwischen den ersten Gasdurchlassöffnungen (18) angeordnete Stege (20) zu der von der mittleren Schicht (24) abgewandten Seite (40) hin verjüngt sind und vorzugsweise zugespitzt sind.

8. Gasverteilerboden nach einem der vorhergehenden Ansprüche,
**dadurch gekennzeichnet, dass**
die zweiten Gasdurchlassöffnungen (26) in Einbaulage winklig zur Vertikalen verlaufen, vorzugsweise in einem Winkel von 30° bis 45° zur Vertikalen geneigt sind.

9. Gasverteilerboden nach Anspruch 8, **dadurch gekennzeichnet, dass**
die zweiten Gasdurchlassöffnungen (26) so geneigt sind, dass der durch die zweiten Gasdurchlassöffnungen (26) hindurchtretende Gasstrom in Einbaulage gegen die Wand der Wirbelschichtapparatur oder Fließbettapparatur gerichtet ist.

10. Wirbelschichtanlage umfassend einen Gasverteilerboden nach einem der vorhergehenden Ansprüche.

11. Fließbettanlage umfassend einen Gasverteilerboden nach einem der Ansprüche 1 bis 9.

12. Wirbelschichtanlage oder Fließbettanlage nach Anspruch 10 oder 11, weiter umfassend eine Steuerungseinrichtung, um die mittlere Schicht (24) in definierten Stufen oder stufenlos zwischen der ersten Position oder der zweiten Position zu bewegen.
